# EUROPEAN PATENT SPECIFICATION

(11) **EP 2 869 729 B1**
(45) Date of publication and mention of the grant of the patent: **27.06.2018**
(21) Application number: 13813026.5
(22) Date of filing: 04.07.2013
(51) Int. Cl.: A47B 7/02, A47B 96/18, B29K 103/08, B44F 9/04, C04B 14/00, A47B 77/02

(54) **A METHOD OF MANUFACTURING A COMPOSITE STONE BOARD WORKTOP**
VERFAHREN ZUR HERSTELLUNG EINER VERBUNDSTEINARBEITSPLATTE
PROCÉDÉ DE FABRICATION DE PLAN DE TRAVAIL EN PIERRE COMPOSITE

(30) Priority: 04.07.2012 AU 2012203909; 04.06.2013 AU 2013902016
(43) Date of publication of application: 13.05.2015
(73) Proprietor: Lode Enterprises Pty Ltd, Melbourne, Victoria 3146 (AU)
(72) Inventor: LODE, Atis Eriks, Melbourne, Victoria 3146 (AU)
(74) Representative: McIlroy, Steven David
(86) International application number: PCT/AU2013/000726
(87) International publication number: WO 2014/005180

(56) References cited:
- WO-A1-2005/016618
- WO-A2-02/064903
- DE-A1-102004 063 301
- IT-B- 1 245 593
- US-A- 6 113 199
- US-A1- 2002 108 172

## Description

### Technical Field

The present invention relates to a method of manufacturing a composite stone.

### Background Art

Composite stone worktops are an increasingly popular solution for residential kitchens and other situations in which a hard wearing yet aesthetic surface is required. Composite stone worktops are currently available, mostly, in a bespoke form, where dimensions for the particular installation are provided to a stone mason to manufacture the worktop. This means that, despite the cost of composite stone being relatively inexpensive, the labour required to manufacture the worktops to a satisfactory standard in a bespoke manner means that the overall cost is relatively high. Some retailers have provided 'do-it-yourself' composite stone worktops previously but the product was not user friendly, as significant modification was required, which resulted in a poor finish and, ultimately, no market desire for the product.

US20020108172 A discloses a method of manufacturing such a composite stone board worktop made of moulded stone slurry.

### Disclosure of Invention

### Disclosure

### Summary

According to the present invention, there is provided a method of manufacturing a composite stone board according to claim 1.

The method further comprises removing the composite stone board from the mould and placing the composite stone board on a backing board.

### Brief Description of Drawings

### Description Of Drawings

Preferred embodiments of the invention defined by the appended claim will now be described, by way on nonlimiting example only, with reference to the accompanying drawings, in which:
Fig. 1 shows a composite stone worktop;
Fig. 2 shows a composite stone worktop with a sink;
Fig. 3(a) shows a cross section of a composite stone board having a supporting backing board, Fig 3(b) shows the backing board of Fig. 3(a) and Fig. 3(c) and Fig. 3(d) show alternative backing boards;
Fig. 4(a), (b), (c) and (d) shows cross sections of alternative composite stone boards and backing boards;
Fig. 5(a), (b), (c) and (d) shows different configurations of backing boards;
Fig. 6(a) and (b) show an arrangement of the composite stone board and backing board for use as side panels or 'waterfalls';
Fig. 7(a) and (b) show a fixing arrangement for fixing the backing board to a structure, such as a cabinet;
Fig. 8(a), (b) and (c) shows a fixing arrangement of one composite stone board having a supporting backing board to another composite stone board having a supporting backing board;
Fig. 9(a) and (b) shows an alternative fixing arrangement of one composite stone board having a supporting backing board to another composite stone board having a supporting backing board;
Fig. 10(a) and (b) shows a further alternative fixing arrangement of one composite stone board having a supporting backing board to another composite stone board having a supporting backing board; and
Fig. 11 shows a fixing arrangement of a device, such as a sink, to the centre of a composite stone board having a supporting backing board;
Fig. 12(a) and (b) shows one embodiment of a backing board for a composite stone worktop;
Fig. 13(a), (b) and (c) shows one embodiment of fixing arrangement, or clamping means, of one composite stone board having a supporting backing board to another composite stone board having a supporting backing board;
Fig. 14(a), (b) and (c) shows one embodiment of fixing arrangement, or clamping means, of one composite stone board having a supporting backing board to another composite stone board having a supporting backing board; and
Fig. 15(a), (b) and (c) shows one embodiment of a composite stone worktop in a waterfall arrangement.

### DETAILED DESCRIPTION

Stone worktops and, particularly, composite stone worktops, as mentioned above, are currently a popular solution for the work surfaces of residential kitchens, as well as other situations in which a hard wearing, yet aesthetic, surface is required. Composite stone is particularly desirable because it is lower cost and because it can be cut or prepared as a relatively thin layer, for example, composite stone, can be produced between 2mm and 20mm, and then adhered or veneered to a backing board. Preferably, due to the strength provided by the backing board, the composite stone thickness is minimised, and preferably, the thickness of the board is between 2mm and 9mm. Standard kitchen worktops are 30mm deep; however, there is a trend to use thicker worktops, such as 40mm. By reducing the thickness of the stone or composite stone used, a lighter and more cost effective product can be produced. It is possible to veneer natural stone to a backing board which, whilst more expensive than composite stone, has similar weight and cost advantages over a full stone thickness worktop.

Composite stone is a man-made product which is produced by making a slurry of crushed stones and adhesives and/or acrylic. The slurry is poured and pressed into slabs to create a product for use in worktops.

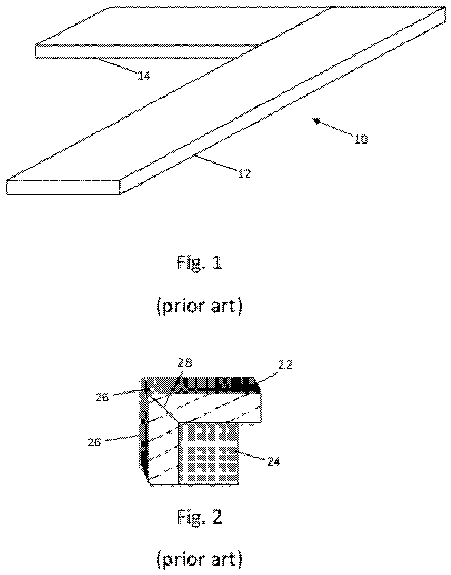

Currently, if a new kitchen worktop surface of stone is required, such as worktop 10 shown in Figure 1, a kitchen installer will visit the intended install location and measure where the worktop is to be situated. The kitchen installer will then construct a template board that fits the desired area. In the case of Figure 1, two portions 12 and 14 are required to fit an 'L' shaped kitchen area.

A stone mason will then take the kitchen installers measurements and template board and construct a backing board, made out of wood or a wood based product, and cut the stone to fit the measurements and template board and then adhere the stone to the backing board. During this process, the stone mason will construct an edge to the stone, which hides the fact that the worktop is not completely stone, but contains a lighter core backing board. This process if the same no matter whether natural stone or composite stone is used.

Figure 2 shows one known method to hide the actual thickness of stone used to construct the worktop. An upper stone board 22 is adhered to a backing board 24. A side stone board 26 is also adhered to the backing board 24 perpendicular to the upper board 22. The upper board 22 and side board 26 have a 45° chamfer such that each board meets the other at an edge 28. To hide the join between the two boards further a chamfer 29 is applied to the outer edge of the join 28. This is simply one known way of providing a veneered stone worktop.

Whilst the above known method of constructing a kitchen stone worktop, or any other stone worktop, provides a useful end product, a large amount of time is required by the kitchen installer and stone mason to produce the required worktops. In particular, a template board, a backing board and the stone requires to be constructed and finished. This results in a very expensive finish, when compared with polyester/ acrylic products, such as Laminex®, or wood based products, such as fibreboard/ chipboard laminates.

Moreover, it is relatively straight forward for a kitchen installer, whether professional or a do-it-yourself enthusiast, to install a worktop made from polyester/acrylic or fibreboard/chipboard, as the products do not need to be specially manufactured and are easy to join together.

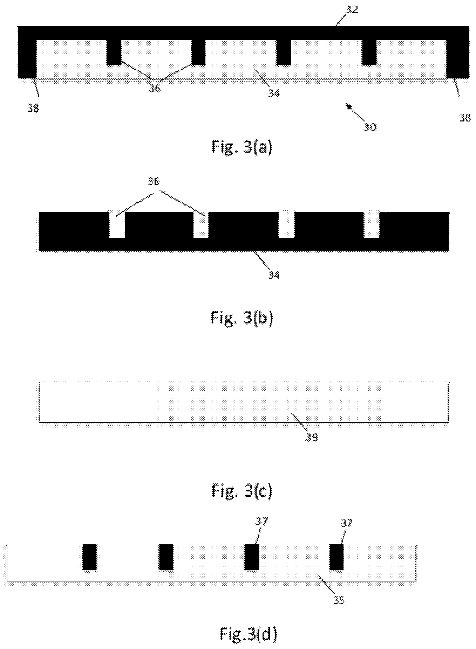

Referring now to Figures 3(a), (b) and (c), a stone worktop 30 is shown in cross-section. Stone 32 is adhered to a backing board 34. The backing board 34 contains recesses 36 and the stone 32, which may be composite stone or natural stone has corresponding projections which fill the recesses 36. These recesses, in this example, are channels which run along the length of the backing board and the projections of the stone are corresponding ribs or 'stringers'. The stone 32 also has edges 38, which project down over the backing board 34 so that it is not easily visible. The edges 38, although not shown here, can extend beyond the backing board 34.

Figure 3(b) shows the backing board 34 of Figure 3(a) without the stone 32, showing the channels or recesses 36 clearly. Figure 3(c) shows an alternative backing board 39 with no recesses and which is not part of the present invention. The backing board 39 would be surrounded by stone in a similar manner to Figure 3(a).

In an alternative example which is not part of the present invention, as shown in Fig. 3(d), recesses of a backing board 35 are not filled with stone but contain an alternative strengthening material 37. For example, the alternative strengthening material 37 which is not part of the invention can be wood, steel or carbon fibre elements, used to provide greater strength than the backing board provides whilst minimising weight. In addition, the recesses of the backing board may face either the stone worktop or away from the stone worktop. The decision of which way to insert the stone worktop will depend on at which stage the recesses are to receive strengthening ribs.

The stone worktop described in relation to of Figure 3(a), (b) and (c) has a number of advantages over previously known stone worktops. Firstly, the recesses 36 on the backing board 34 and corresponding projections of the stone allow the stone 32 to be thinner, as additional support is provided by the ribs. Secondly, where composite stone is used, the stone 32 can be constructed with integral edges 38, that is, the edges 38 are not separate pieces of composite stone.

The backing board 34, and any other backing board discussed herein is, preferably, made out of plastics, making it more resistant to breaking down, especially due to water ingress, and giving longevity to the product. However, it can also be made of other appropriate materials, including wood or metal based products, or a combination of these.

To enable construction of the worktop 30, when it is made our of composite stone, the composite stone slurry, which is a mix of crushed stones and adhesives and/or acrylic, known as a binder, is poured onto a mould which matches the shape of the backing board, or is poured onto the backing board itself before being finished in a known manner of composite stone boards. Therefore, a composite stone board can be produced with an integral backing board. Not according to the invention, the mould is removed after the composite stone board has been produced and a backing board is subsequently attached, by, for example, adhesives.

It is also possible to create edges which hide the backing board automatically during this process by compacting the edges into the mould or using a mould which includes the provision of edges. The edges can then be finished by either cutting and polishing or just polishing, as the main surface of a composite stone board is typically finished.

Having the backing board and the stone integrally produced or combined at this stage also means less composite material is used to create a composite stone worktop, thus further reducing the cost of making the bench tops. This is particularly due to the waste stone produced when a stone mason is required to produce a custom worktop.

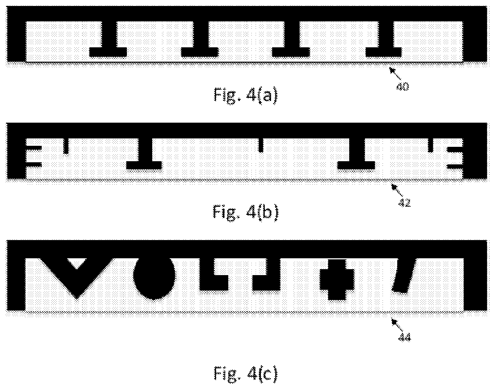

Figures 4(a), (b) and (c) show cross-sections of composite stone worktops 40, 42 and 44, which are similar to the worktop 30 of Figure 3(a) but with alternative arrangements of recesses and projections of the backing board and composite stone. In this manner it is demonstrated that alternative arrangements of the backing board can be produced.

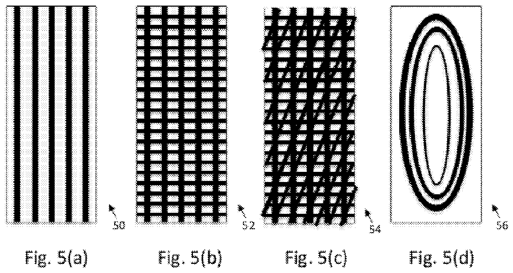

Referring now to Figures 5(a), (b), (c) and (d), sectional plan views of composite stone boards are shown. The sectional view allows the patterns of the projections from the composite board in the backing board. For example, a worktop 50 in Figure 5(a) has parallel ribs of composite stone. In fact, the worktop 50 is the type of ribbed composite stone board described in relation to Figure 3(a). Figure 5(b) shows a worktop 52 in which the projections of the composite stone board have ribs on two axes, creating a ladder type pattern. Figure 5(c) shows a worktop with the same projections as Figure 5(b) but with additional diagonal ribs. Figure 5(d) shows a worktop in which the ribs are in the form of concentric ovals.

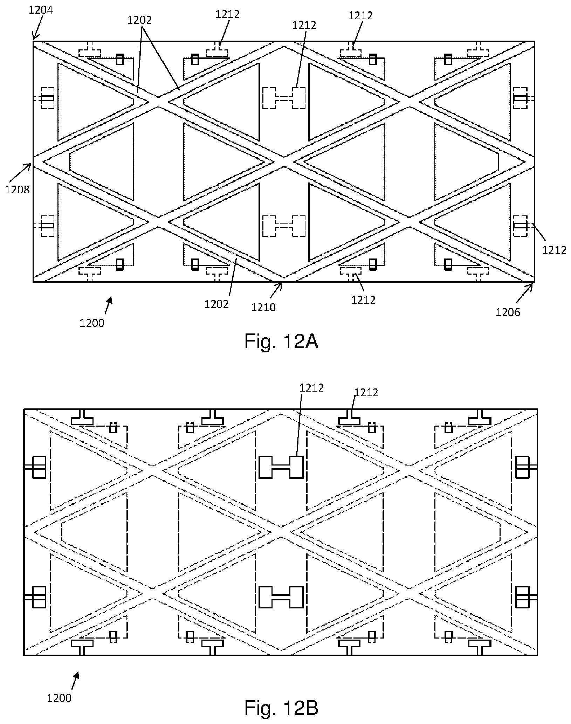

Referring now to Figure 12(a) and (b), a backing board 1200 is shown which is appropriate for a natural or composite stone worktop, where elements represented with dashed lines are not directly visible (hidden) in that view. Figure 12(a) shows a first side of the board 1200 and Figure 12(b) shows a second side of the board 1200. In this embodiment, the board 1200 has a plurality of recesses 1202 which are arranged diagonally, with respect to the edges of the board 1200. One recess 1202 is arranged from a first corner 1204 of the board 1200 to an opposite corner 1206. Another recess is arranged from a mid-point 1208 of one side of the board 1200 to a mid-point 1210 of an orthogonal side of the board 1200. This pattern of having recesses from corners and mid-points of the board 1200 is repeated to form a criss-cross pattern. This arrangement is particularly advantageous as a second board of the same design may be abutted on any side of the first board (1200) and the recesses of each board will form continuous recesses, allowing multiple boards to be arranged side-by-side in a modular fashion, as required.

Furthermore, this particular embodiment of the board 1200 is a rectangular shape which may be separated at a mid-point of the longer side to form two smaller boards of a square shape, allowing additional flexibility. Alternatively, a board of a design corresponding to one half of the board 1200 (separated along the mid-point of the longer side) may be manufactured separately.

The board 1200 also includes clamping points 1212. These clamping points 1212 allow boards which have been abutted together, with or without being attached to corresponding stone, to be fixed from movement using a clamping means. Importantly, the clamping points are arranged such that, when boards 1200 are attached to corresponding stone, abutment and placement of the stone can be carried out easily and quickly.

In use, the recesses are filled with strengthening materials before being adhered to a natural or composite stone worktop. In this embodiment, the first side, as shown in Figure 12(a) is adhered to the stone worktop and the second side, as shown in Figure 12(b), faces away from the stone worktop. In this manner, the stone worktop can be constructed as a thin facing, with resistance to flex provided by the backing board and the strengthening materials in the recesses. In this manner, the overall weight of the stone worktop can be reduced significantly. Whilst using basic backing boards with stone worktops is known, use of a backboard as disclosed herein allows further significant reduction in the thickness of the stone worktop, whilst still providing the required resistance to flexing which might cause the stone worktop to crack in transportaion or use.

Whilst the backboards disclosed herein are, in general, described for use with composite stone worktops, it is also possible, though not part of the present invention, to use these backboards with stone which is not created in a composite manner, such as quarried stone. In a similar manner, the overall weight of stone worktop can be reduced.

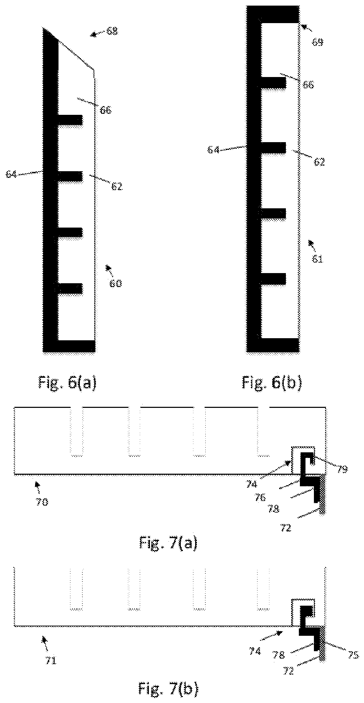

Referring now to Figure 6(a), a side panel 60 is shown having a backing board 62 and stone board 64. The backing board 62 has recesses 66, as has been described earlier. Side panels are used where a large area of vertical composite stone is desired. The side panel 60 has a 45° cut 68 which can be joined to a corresponding cut on a horizontal worktop. Alternatively, a side panel 61, which is otherwise identical to side panel 60, has an end piece 69 which is similar to that of a horizontal worktop.

A method of joining the side panels 60 and 61 is discussed below. However, these panel enable a number of designer features in kitchen installations including, for example, 'waterfall' joins, where the worktop continues from horizontal to vertical, usually all the way down to the ground and with a seamless join.

Now referring to Figures 7(a) and (b), a backing board 70 and 71 is shown. Although not shown, a composite stone board would already in place in these Figures, but has been left out for simplicity.

Backing board 70 requires to be affixed to a vertical supporting structure 72. In practice, the structure 72 can be a kitchen cabinet, wall or other suitable structure. To enable the backing board 70, and, therefore, the corresponding worktop, to be easily affixed, a recess 74 is provided in the backing board 70 into which a clip 76 can be temporarily or permanently seated. The clip 76 has an extending portion 78 which can receive a screw, or other attachment means, for fixing to the structure 72.

The clip 76 has a lip 79 which prevent lateral movement and, therefore, prevents the worktop from separating from the structure 72.

Backing board 71 is also affixed to the structure 72 and has a recess 74. An alternative clip 75 is shown, which still has an extending portion 78 for securing the clip to the structure 72. The clip 75 does not, however, have a lip preventing lateral movement. In this case, clip 75 can either allow lateral movement, or be permanently fixed into the backing board 71, and, therefore, prevent lateral movement.

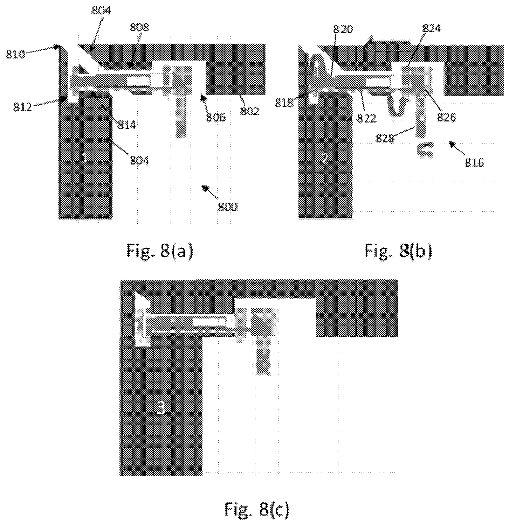

Referring now to Figure 8(a), (b) and (c), a corner joint 800 is shown in which a horizontal composite stone worktop 802, such as that described in relation to Figure 3(a) but having a 45° end, and a vertical composite stone side panel 804, such as that described in relation to Figure 6(a), is shown.

Horizontal worktop 802 has a 45° face 804 at one end, a recess 806 a predetermined distance from the face 804 and a passage 808 between the recess 806 and face 804. Similarly, the vertical side panel has a 45° face 810, recess 812 and passage 814 between the face 810 and passage 814.

The passages 808 and 814 are arranged such that, if they meet substantially exactly, the face 810 and face 804 also meet substantially exactly, creating a smooth join between the horizontal worktop 802 and the vertical worktop 804. To enable the passages to meet exactly a fixing means 816 is provided.

For clarity, fixing means 816 is only fully labelled in Figure 8(b) but it should be appreciated that Figures 8(a), (b) and (c) all show exactly the same features at progressive steps in the process of fixing the worktops 802, 804 together.

Fixing means 816 includes a first end stop 818, inner screw 820, outer screw barrel 822, second end stop 824, universal joint 826 and actuating bar 828.

In use, inner screw 820 is inserted into passage 814 from the face 810 and first end stop 818 is inserted into recess 812. Inner screw 820 is then engaged onto first end stop 818. The engagement between the inner screw 820 and the first end stop 818 is such that inner screw 820 is not free to rotate relative to the end stop 818. Moreover, the end stop 818 is, at least, prevented from exiting from the end of the inner screw 820. Furthermore, the end stop 818 is also prevented from rotating, preferably due to a combination of the shape of the end stop 818 and the shape of the recess 812.

Outer screw barrel is inserted into passage 808 from recess 806 with the second end stop 824 already in place. The inner screw 820 is inserted into the outer screw barrel 822 and the actuating bar 828 is rotated, which, due to universal joint 826, rotates the outer screw barrel 822. As such, the outer screw barrel 822 is screwed onto the inner screw 820. The two passages 814 and 808 are sized to match the outer screw barrel 822 such that, when screwed together, the two passages 814 and 808 meet up substantially exactly, as shown in Figure 8(c).

The fixing means 816, especially due to the universal joint 826, may be quickly screwed together using a power tool. Whether a power tool is used or not, the fixing means 816 is accessible vertically, so that access is easy and to increase the speed to tightening. In this case the actuating bar 828 has an end capable of being rotated by a suitable matching head on the power tool. For example, the actuating bar 828 can have a recess slot for accepting a corresponding flat screwdriver end or the actuating bar 828 can have a hexagonal end over which a standard socket. Having a fixing mechanism operable by a power tool is particularly advantageous in the field of stone worktops, as the stone worktops are heavier than standard worktops and, therefore, if manual fixings are used, additional persons are required to install. A fixing mechanism operated by a power tool allows for a quick install and allows for a person to operate the fixing mechanism with one hand allowing them to hold or manoeuvre the composite stone worktops being fixed together. Fixing means, such as described above reduces the amount of labour required to join the worktops together.

In addition, using a fixing means, such as that described in relation to Figures 8(a), (b) and (c), allows the fixing together of composite stone boards with backing boards without specialist equipment. That is, a stone mason typically requires to use a quick setting adhesive and a jig to adhere a worktop and side panel (or any other combination of stone worktop boards) together, which then requires to be transported as a whole to the location for installation. Fixing means have been utilised between standard non-stone worktops have been known to use an all thread bolt (that is a bolt having no head and threaded fully along its length) with a nut at either end. These fixing means have disadvantages including: that the all thread bolt does not provide a smooth surface for accurate mating of the board; it requires holding or tightening from both ends of the bolt; there is no easy way to use a power tool to speed up the installation; and a spanner, or other like tool, requires room for it to be physically turned around. This can be quite difficult when working with worktops due to the limited space.

Although a universal joint 826 is shown for turning the outer screw barrel 822, it is possible to use alternative means of driving the outer screw barrel. For example, the screw barrel may have a hexagonal nut end and the recess may be large enough to allow a spanner or socket to be inserted to turn the barrel. Or, it may be possible to connect a flexible drive means, such as a spring steel gear.

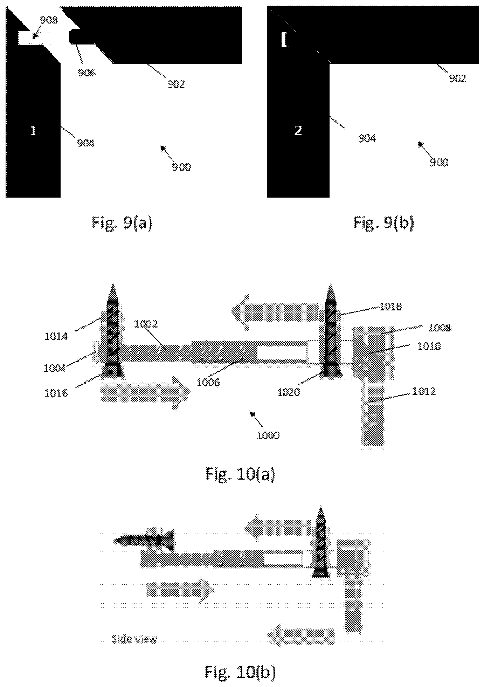

An alternative means of fixing a worktop and side panel together is shown in Figures 9(a) and 9(b). Again, a corner joint 900 is shown having a horizontal composite stone worktop 902 and a vertical composite stone side panel 904. Worktop 902 has a protrusion 906 and side panel 904 has a recess 908. The protrusion 906 and recess 908 are manufactured and positioned such that protrusion 906 fits into recess 908 such that the worktop 902 and side panel 904 are joined together with substantially no overlap.

A further alternative means of means of fixing a worktop and side panel together is shown in Figures 10(a) and (b). Fixing means 1000 has an inner screw 1002, first end stop 1004, outer screw barrel 1006, second end stop 1008, universal joint 1010 and an actuating means 1012, which are similar features to those described in relation to Figure 8.

However, fixing means 1000 also has a first anchor barrel 1014 and first anchor screw 1016 as well as a second anchor barrel 1018 and second anchor screw 1020. The inner screw 1002 passes through the first anchor barrel 1014 and first end stop 1004 engages with first anchor barrel 1014. Similarly, the outer screw barrel 1006 passes through the second anchor barrel 1018 and second end stop 1008 engages with the second anchor barrel (although it allows the barrel to rotate).

In use, the first anchor screw 1016 is screwed into a predetermined point in the backing board of a composite stone worktop as described above, and the second anchor screw is screwed into a predetermined point on another composite stone worktop. When the outer screw barrel 1006 and inner screw 1002 are engaged and screwed together, the two composite stone worktops are drawn together.

Preferably, the predetermined points for the first and second anchor screws 1016 and 1020 are pre-formed in the respective backing boards of the worktops, so that accuracy is ensured.

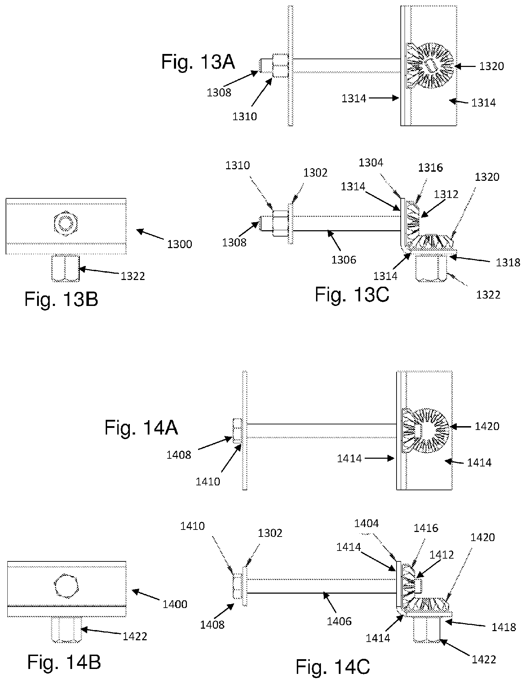

Referring now to Figure 13(a), (b), and (c), a further embodiment of a fixing, or clamping, means 1300 is shown. Figure 13(a), shows a top view, Figure 13(b) shows a side view and Figure 13(c) shows an end view of the clamping means 1300.

The clamping means 1300 includes a first anchoring means 1302, in the form of a flat member 1302 and a second anchoring means 1304, in the form of an L-shaped member 1304. An inner screw 1306 is arranged to pass through respective passages in the flat member 1302 and L-shaped member 1304. A first end 1308 of the inner screw 1306, which passes through a passage in the flat member 1302, has a screw thread for accepting a nut 1310, the nut being an outer screw barrel in this embodiment. The nut 1310 can be fixed to the flat member 1302, so that it doesn't rotate, or it can be left so that it is free to rotate. If it is left free to rotate, the nut 1310 can either be held by a spanner, or other similar tool, or friction against the flat member 1302 can be sufficient to prevent the nut 1310 from rotating when the inner screw 1306 is rotating. A second end 1312 of the inner screw 1306, which passes through a passage in a first face 1314 of the L-shaped member 1304, is fixedly connected to a first gear 1316. The L-shaped member 1304, on a second face 1316, has a second passage through which a shaft 1318 passes through. On one end of the shaft 1318 is a second gear 1320 and on the other end of the shaft is a hexagonal drive 1322. The first gear 1316 and second gear 1320 are engageable such that rotation of one gear rotates the other.

Referring now to Figure 14(a), (b), and (c), an alternative embodiment of a fixing, or clamping, means 1400 is shown. Figure 14(a), shows a top view, Figure 14(b) shows a side view and Figure 14(c) shows an end view of the clamping means 1400.

The clamping means 1400 includes a first anchoring means 1402, in the form of a flat member 1402 and a second anchoring means 1404, in the form of an L-shaped member 1404. An inner screw 1406 is arranged to pass through respective passages in the flat member 1402 and L-shaped member 1404. A first end 1408 of the inner screw 1406, which passes through a passage in the flat member 1402, has a head 1410, the head 1410 prevents the inner screw 1406 from passing through the passage in the flat member 1402. A second end 1412 of the inner screw 1406, which passes through a passage in a first face 1414 of the L-shaped member 1404 has a screw thread which is capable of being screwed into a corresponding thread on a first gear 1416. The L-shaped member 1404, on a second face 1416, has a second passage through which a shaft 1418 passes through. On one end of the shaft 1418 is a second gear 1420 and on the other end of the shaft is a hexagonal drive 1422. The first gear 1416 and second gear 1420 are engageable such that rotation of one gear rotates the other.

In this example, the gears 1316, 1320, 1416, 1420 are advantageously shown at substantially 90 degrees, but other angles are possible, according to requirements, without detracting from the main purpose, which is to provide quick and easy tightening of the clamping means. For example, a particularly preferred method of rotating the hexagonal drive 1322, 1422 is by an electric drill or screwdriver. However, the fact that the hexagonal drive is presented at 90 degrees to the clamping means and is offset means a regular spanner or socket could also be used. Prior art clamping means are known which simply comprise a bolt and nut and provide difficult access by standard tools when fitting kitchen worktops. In particular, access to the nut typically only allows use of a spanner and only approximately a quarter of a turn is possible. The clamping means disclosed herein allows full rotation and use of electric tools, to vastly increase the speed at which worktops can be installed.

The gears 1316, 1320, 1416, 1420 are shown as bevel gears, however, any gears suitable to change the angle of rotation can be used.

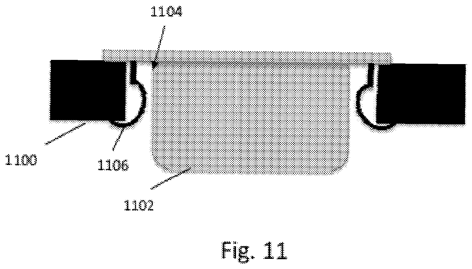

Referring now to Figure 11, a composite stone worktop board 1100 is shown with a sink 1102 inserted into a corresponding hole in the board 1100. Although a sink is shown, any item that requires to be inserted into a composite stone worktop board is also applicable to this description.

A plurality of clips 1104 extend from the sink 1102. The clips 1104 include a sprung steel portion 1106. When the sink 1102 is inserted into the board 1100, the clips 1104 deform as they pass through hole and, when they reach the far side of the board 1100, spring out to grip onto the bottom side of the board 1100.

In this manner, sinks, stove tops and other features which require to be installed into a composite stone worktop can be installed quickly and efficiently.

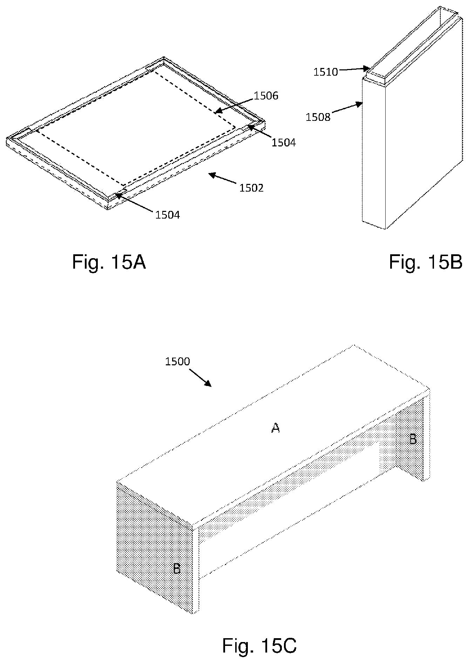

Referring now to Fig 15(a), 15(b) and 15(c), a waterfall assembly 1500 is shown. Fig. 15(a) shows a worktop 1502, which is preferably constructed with a backing board and stone worktop as described above.

The worktop 1502 contains recesses 1504 at either end. A backing board 1506, shown in dashed lines in this case, provides additional support for the worktop 1502 as described above.

Shown in Fig. 15(b), a waterfall end 1508 is shown. There are two of these for each waterfall. The waterfall end 1508 has a protrusion 1510 which matches the recess 1504 of the worktop. The waterfall end 1508 contains a support structure, which can be the same as the backing board used on a worktop.

In this manner, a waterfall assembly 1500 can be easily constructed by slotting the protrusion's 1510 of two waterfall ends 1508 into the recesses 1504 of the worktop 1502. Adhesive can be applied to the mating surfaces 1512 of the protrusions and recesses to ensure that the waterfall ends and worktop are securely fixed. However, the structure is designed to be supported by the depth of the protrusions and recesses.

Modifications and improvements may be made without departing from the scope of the present invention defined in the appended claim.

## Claims

1. A method of manufacturing a composite stone board worktop (30) including:
providing a composite stone slurry in the form of a mixture of crushed stone particles and a binder,
providing a mould in the form of a backing board (34) which provides support for the composite stone board;
depositing the mixture by pouring it onto the backing board mould (34); and
subsequently hardening of the mixture to provide the composite stone board worktop (30);
providing recesses in the form of channels (36) running along the length of the backing board mould (34) and providing the composite stone board worktop (30) with projections in the form of ribs which correspond to and fill the channels (36); and
providing the composite stone board worktop (30) with edges (38) which project down over the backing board mould (34) so that it is not easily visible.

## Patentansprüche

1. Verfahren zum Herstellen einer Verbundsteinarbeitsplatte (30), aufweisend:
Bereitstellen einer Verbundsteinschlämme in der Form einer Mischung von zermahlenen Steinpartikeln und einem Bindemittel,
Bereitstellen eines Formkörpers in der Form einer Rückwand (34), die eine Unterstützung für die Verbundsteinplatte bereitstellt;
Ablagern der Mischung durch Gießen derselben auf den Rückwandformkörper (34); und
anschließendes Härten der Mischung, um die Verbundsteinarbeitsplatte (30) bereitzustellen;
Bereitstellen von Aussparungen in Form von Kanälen (36), die entlang der Länge der Rückwandformkörpers (34) verlaufen und Bereitstellen der Verbundsteinarbeitsplatte (30) mit Vorsprüngen in der Form von Rippen, die den Kanälen (36) entsprechen und diese füllen; und
Bereitstellen der Verbundsteinarbeitsplatte (30) mit Kanten (38), die über den Rückwandformkörper (34) nach unten vorspringen, so dass er nicht leicht sichtbar ist.

## Revendications

1. Procédé de fabrication d'un plan de travail à panneau de pierre composite (30) comprenant :
fournir une bouillie de pierre composite sous la forme d'un mélange de particules de pierre concassée et d'un liant,
fournir un moule sous la forme d'un panneau de support (34) qui fournit un support pour le panneau de pierre composite ;
déposer le mélange en le versant sur le moule de panneau de support (34) ; et
ensuite durcir le mélange pour fournir le plan de travail à panneau de pierre composite (30) ;
ménager des évidements sous la forme de canaux (36) s'étendant sur la longueur du moule de panneau de support (34) et munir le plan de travail à panneau de pierre composite (30) de saillies en forme de nervures qui correspondent aux canaux (36) et les remplissent ; et
munir le plan de travail à panneau de pierre composite (30) de bords (38) qui font saillie vers le bas au-dessus du moule de panneau de support (34) de sorte qu'il ne soit pas facilement visible.
